# EUROPEAN PATENT APPLICATION

(11) **EP 2 182 409 A1**
(43) Date of publication of application: **05.05.2010**
(21) Application number: 08167949.0
(22) Date of filing: 30.10.2008
(51) Int. Cl.: G03B 11/04

(54) **Camera cap with a white balance insert**

(71) Applicant: Lee, Chung-Ho Jim, Los Angeles, CA 90025 (US)
(72) Inventor: Lee, Chung-Ho Jim, Los Angeles, CA 90025 (US)
(74) Representative: Wilhelms · Kilian & Partner Patentanwälte

(57) **Abstract**

A dual-purpose camera cap functions as a camera lens protector and a white balance filter. The camera cap includes a camera cap body having a central locking mechanism or a flexible member to engage with or fitted over a camera lens housing. The camera cap body also includes a ring-shaped area, around the center locking mechanism, to be placed in front of a camera lens to partially cover the camera lens. The ring-shaped area defines a center cut-out region. A translucent piece is fitted into the center cut-out area of the camera cap to protect the camera lens and provide the white balance filtering function. Furthermore, the translucent piece is one of a plurality of interchangeable translucent pieces, providing the user with different choices in achieving a neutral, cooling, or warming white balance effect.

## Description

### TECHNICAL FIELD

Embodiments of the present invention relate to camera accessories, and more specifically, to a camera cap having a white balancing insert.

### BACKGROUND

White balance refers to the capture of the color temperature reflected from a photographic subject and the adjustment of camera settings based on the captured color temperature. The camera settings are adjusted such that the colors in the final print substantially match those in reality.

Most digital cameras have an automatic white balance function. However, automatic white balance readings may sometimes fail to correctly distinguish various types, amount and directions of light falling on a scene.

One solution to the problem is to base the white balance setting on a custom setting, typically a scene exposed at 18% gray. This can be done by capturing a reference photo, which typically includes a neutral scene (e.g., a card printed at 18% gray) or a neutral-toned scene (e.g., sidewalk). The reference photo is saved in the camera and used to set the custom white balance in the camera. The reference photo may be taken using a white balance filter lens. However, conventional white balance filter lenses are typically designed to allow easy placement and removal, and are not designed to securely lock to the camera as camera lens protection devices. As a result, conventional white balance filters typically are insecurely placed onto the camera lens and often have the problem of falling off easily. For example, some conventional white balance filter lenses (e.g., ExpoDisc, a product of ExpoImaging, Inc. of Morgan Hill, California) uses ball bearings to attach to the inner rim of the lens housing. The ball bearing design allows the ExpoDisk to be easily put on and taken off. However, a standard inner rim of the lens housing for lens filter attachment is a screw (or thread) type machining. Ball bearing locks cannot accurately line up consistently with the threads as the threads are slanted by nature.

Therefore, a conventional white balance filter lens is generally not an effective lens protection device. Any contact with the inside of a camera bag will likely separate the filter lens from the front of the camera lens, and may even cause damage to the front element of the camera lens, the camera lens body, or the camera itself. Thus, it is generally necessary for a photographer to carry a white balance filter lens as an additional device in the camera bag, and to perform the steps of removing the camera cap and placing the white balance filter lens before taking a reference photo.

### BRIEF DESCRIPTION OF THE DRAWINGS

The present invention is illustrated by way of example, and not by way of limitation, in the figures of the accompanying drawings and in which:

**Figure 1** **and** **Figure 4** illustrates a front view of a camera cap having a white balance insert according to an embodiment of the invention.

**Figure 2** illustrates a back view of the camera cap of **Figure 1** **and** **Figure 4****.**

**Figure 3** **and** **Figure 5** illustrates a side profile of the camera cap of **Figures 1** and **2****.**

### DETAILED DESCRIPTION

Described herein is a camera cap assembly that function as a white balance filter and a camera lens protection device. The camera cap assembly has a translucent fitment for custom white balance and a locking mechanism to securely lock the cap assembly onto a camera lens housing. The translucent fitment (also referred to as a translucent piece or a white balance insert) has a predetermined transparency and color tone (e.g., 18% gray), thus allowing a user to select a custom setting for in-camera white balance. The translucent piece is designed to be sufficiently large for the purpose of receiving incident light, but leaves adequate surrounding area on the cap body to accommodate a locking mechanism that securely locks the camera cap assembly onto the camera. Thus, the camera cap assembly can function in lieu of a conventional lens protection cap.

The camera cap assembly described herein can be easily attached to and removed from a camera lens housing, and, at the same time, effectively serves as a white balance filter and a camera lens protection device. The dual feature of the camera cap is realized by providing a ring-shaped area on the cap body surrounding the white balance insert, and by placing a secure locking mechanism at least partially in the ring-shaped area. The secure locking mechanism can be easily locked and unlocked. The diameter of the white balance insert is reduced to the extent necessary for the placement of the locking mechanism without a noticeable effect on the accuracy of the custom white balance function.

In some embodiments, the white balance insert may be manually removable from the camera cap body and interchangeable with other inserts. These interchangeable inserts have substantially the same dimension, but may have different color tones, different degrees of translucency, different textures, etc. The white balance insert is locked onto the camera cap body by an interlocking mechanism that securely locks the insert in place and allows easy insertion and removal of the insert. Examples of the interlocking mechanisms include threaded screws, ball bearings, magnets, pressure fitment, locking rings or other suitable mechanisms. Alternatively, the white balance insert may be immovably attached to the camera cap body in some embodiments.

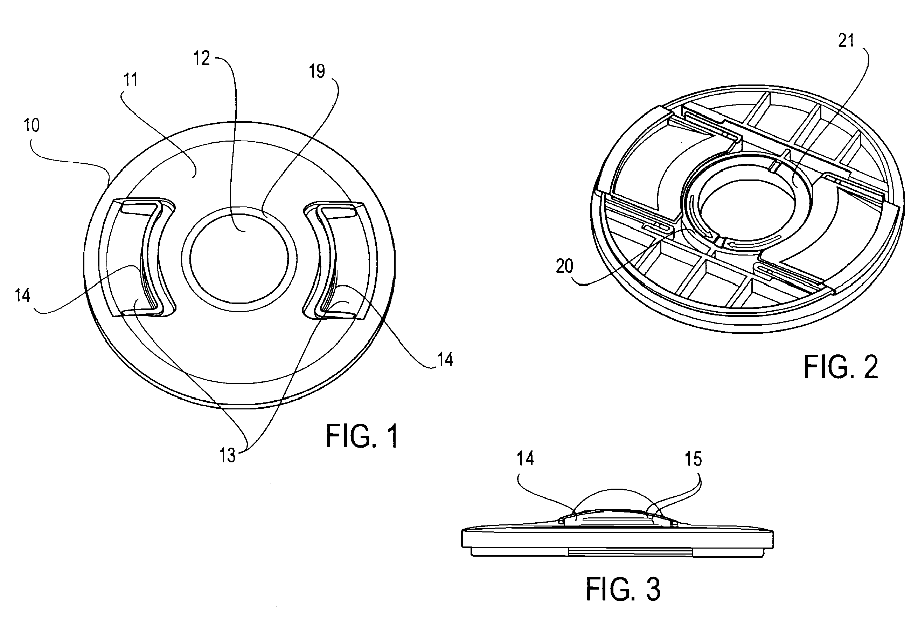

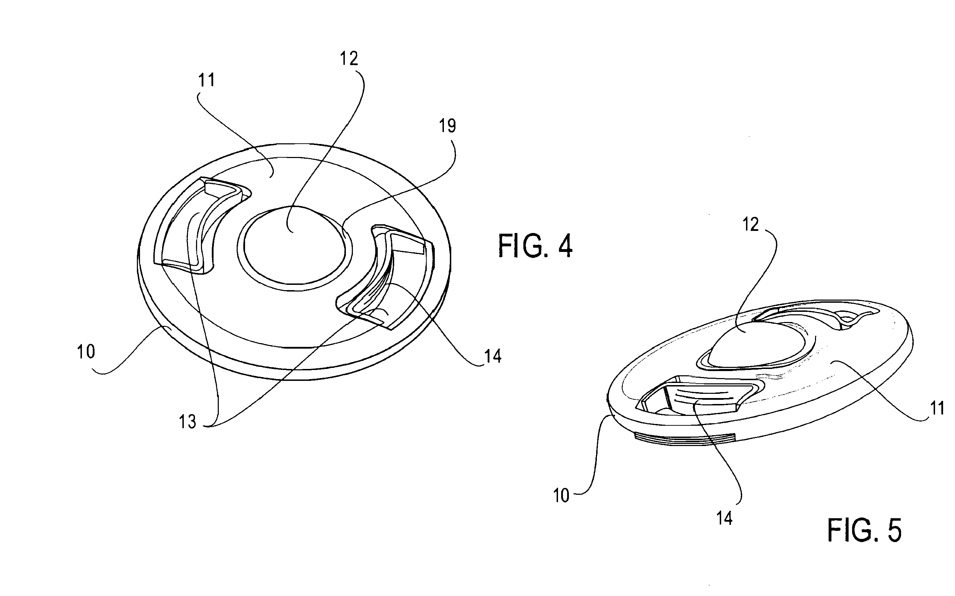

**Figure 1** **and** **Figure 4** illustrates a front view of a camera cap assembly 10 according to an embodiment of the invention. Camera cap assembly 10 includes a camera cap body 11 and a balance insert 12. Camera cap body 11 has a cut-out region correlating to the area covered by the in-camera spot meter. The cut-out region is defined by a ring-shaped area of 19, which is to be placed in front of a camera lens to partially cover the camera lens. Ring-shaped area 19 is typically opaque. Camera cap body 11 also includes a locking or attaching mechanism for engaging camera cap body 11 with the camera lens housing (not shown). For example, the locking or attaching mechanism may include, but is not limited to, a pressure locking mechanism (e.g., a side pinch mechanism or a center release mechanism), a flexible attachment lip, a threaded mechanism, or other secure mechanisms. The mechanism may be determined based on the type of camera lens and camera lens accessories that will be used. For example, a center release mechanism 14 with inner pinch tabs, as shown in **Figure 1** **and** **Figure 4****,** may be more suitable when a camera hood is placed in front of the camera lens. With the placement of the camera hood, it becomes very difficult to remove or attach a lens cap (such as a side pinch lens cap or a threaded lens cap) securely from the side, because there is minimal space between the lens hood and the edge of the lens cap to release the locking mechanism. A center release mechanism 14 with inner pinch tabs can resolve the problem caused by the use of the camera hood. A central release mechanism also precludes the accidental removal of a lens cap while it is being carried on the body or from bumping around in a camera bag.

As another example, a flexible attachment lip may be more suitable for use with a non-threaded filter lens, e.g., a wide-angle camera lens. This is because in some instances, a wide angle lens may not have front threads or a front rim to engage a pressure locking mechanism or a threaded mechanism. Instead of locking onto the rim of the camera lens housing, a flexible attachment lip simply fits over the outer perimeter of the camera lens housing. In the flexible attachment lip embodiment, the inner diameter of the camera cap may be larger than the inner diameter of the wide angle lens filter. For example, a wide angle lens with an 82 mm inner filter diameter may use a camera cap with an 85 mm inner diameter. The flexible attachment lip is typically made of a soft polycarbonate material or other suitable materials to have enough flexibility or stretch for a secure fitting.

**Figure 1** **and** **Figure 4** shows the embodiment where camera cap body 11 includes a pressure locking mechanism that can be used as a center release mechanism. In **Figure 1** **and** **Figure 4****,** two locking tabs 13 are positioned on opposite sides of camera cap body 11. Locking tabs 13 include inner pinch members 14. Inner pinch members 14 protrude outwardly, and can be pressed by a user toward the center of camera cap body 11. When placing cap assembly 10 in front of the camera, inner pinch members 14 function as pressure locks to lock onto the inner rim of the camera lens housing. Inner pinch members 14 have a raised profile relative to the locking tabs 13. A user may press the inner pinch members 14 to engage cap assembly 10 with or disengage cap assembly 10 from the camera.

It is understood, however, the embodiment of **Figure 1** **and** **Figure 4** is for illustration only and numerous variations may exist. Camera cap body 11 may have only one of the side pinch mechanism or the center release mechanism. The design of the side pinch mechanism and the center release mechanism may differ from what is shown in **Figure 1** **and** **Figure 4****.** For example, center pinch members 14 may not protrude outwardly but may be aligned with the perimeter of camera cap body 11. Instead of using side pinch members 14 as pressure locks, locking tabs 13 may include catch members at the back side to engage with the inner rim of the camera lens housing. It is understood that embodiments of the invention include variations of the side pinch and inner pinch designs.

Referring to **Figure 1** **and** **Figure 4****,** in the center of cap body 11 is a cut-out region covered by a white balance insert 12. The white balance insert 12 includes a translucent piece calibrated to a predetermined translucency and color tone (e.g., 18% gray). Balance insert 12 may be used for custom white balance setting. In some embodiments, a user may interchange balance insert 12 to choose a neutral, cooling, or warming white balance effect. In alternative embodiments, balance insert 12 may be immovably attached to cap body 11 as an integral part of camera cap 10.

**Figure 2** shows a back view of camera cap assembly 10 of **Figure 1** **and** **Figure 4****.** When locking tabs 13 are pressed inwardly in a radial direction, the cap assembly 10 can be placed on or removed from the lens. Locking tabs 13 are restored to their original shape when locking tabs 13 are released by either steel or plastic deformable springs (not shown). **Figure 2** also shows a reinforcement lip 20 (e.g., reinforced plastic) that partially extends the back surface of cap body 11 into the center cut-out region. Reinforcement lip 20 functions as a retainer for locking ring 21. Locking ring 21 functions as a stop element that stops balance insert from going through the center cut-out region of cap body 11. Reinforcement lip 20 prevents balance insert 12 from falling out from the back of camera cap assembly 10 when locking ring 21 is properly secured.

**Figure 3** **and** **Figure 5** shows a side profile of camera cap body 11. The side profile also shows horizontal grooves 15 in center pinch members 14. In one embodiment, camera cap body 11, has a solid perimeter to preclude accidentally releasing the locking tabs 13.

A skilled person in the art will understand that numerous variations from what is shown may exist. Although not shown in Figure 3, it is understood that the inner perimeter of cap body 11 is shaped to easily interlock with balance insert 12. Balance insert 12 may have different color tones and different translucency for different photographic effects. Translucent balance insert 12 may be made of plastic, glass, or any suitable material. The inner perimeter of cap body 11 may include threads for threaded screw type balance insert, grooves for ball bearing type balance insert, magnets for magnetic type balance insert, or the like to attach balance insert 12. Alternatively, balance insert 12 may include threads for threaded screw type balance insert, grooves for ball bearing type balance insert, magnets for magnetic type balance insert, or the like to attach to cap body 11.

Thus, a camera cap assembly with a white balance insert has been described. It is to be understood that the above description is intended to be illustrative, and not restrictive. Many other embodiments will be apparent to those of skill in the art upon reading and understanding the above description. The scope of the invention should, therefore, be determined with reference to the appended claims, along with the full scope of equivalents to which such claims are entitled.

## Claims

1. An apparatus comprising:
a camera cap body having a locking mechanism to engage with a camera lens housing, and a ring-shaped area to be placed in front of a camera lens to partially cover the camera lens;
and a translucent piece fitted into a center cut-out area of the camera cap body, the center cut-out region defined by the ring-shaped area.

2. The apparatus of claim 1 wherein the translucent piece is to be manually removable from and manually insertable into the camera cap body.

3. The apparatus of claim 1 wherein the locking mechanism is at least partially located on the ring-shaped area of the camera cap body.

4. The apparatus of claim 1 wherein the locking mechanism includes pressure locks coupled to deformable members to engage with the camera lens housing.

5. The apparatus of claim 4 wherein the locking mechanism includes a pinch mechanism to secure onto the internal threads of a camera lens.

6. The apparatus of claim 4 wherein the locking mechanism includes a center release mechanism.

7. The apparatus of claim 1 wherein the translucent piece includes an interlocking mechanism located on an outer perimeter of the translucent piece to engage with an inner perimeter of the ring-shaped area on the camera cap body.

8. The apparatus of claim 1 wherein the translucent piece includes threads on an outer perimeter of the translucent piece to engage with corresponding threads on an inner perimeter of the ring-shaped area on the camera cap body.

9. The apparatus of claim 4 wherein the outer perimeter of the camera cap body is smooth, reducing the risk of accidental removal.

10. The apparatus of claim 1 wherein the translucent piece includes a plurality of ball bearing elements on an outer perimeter to lock into corresponding grooves on an inner perimeter of the ring-shaped area on the camera cap body.

11. The apparatus of claim 1 wherein the translucent piece includes a plurality of different sizes to suit the specific metering needs of the lens and camera being used.

12. The apparatus of claim 1 wherein the translucent piece is one of a plurality of interchangeable translucent pieces, providing the user with different choices in achieving a neutral, cooling, or warming white balance effect.

13. The apparatus of claim 1 wherein the camera cap body further includes a locking ring to secure the removable translucent balance piece.

14. An apparatus comprising:
a camera cap body having a flexible member at an outer perimeter of the camera cap body to be fitted over an outer perimeter of a camera lens housing and a ring-shaped area to be placed in front of a camera lens to partially cover the camera lens; and
a translucent piece fitted into a center cut-out area of the camera cap body, the center cut-out region defined by the ring-shaped area.

15. The apparatus of claim 14 wherein the translucent piece can be manually removable from and manually insertable into the camera cap body.

16. The apparatus of claim 14 wherein the translucent piece includes threads on an outer perimeter of the translucent piece to engage with corresponding threads on an inner perimeter of the ring-shaped area on the camera cap body.

17. The apparatus of claim 16 wherein the translucent piece includes a domed front surface.

18. The apparatus of claim 14 wherein the translucent piece includes an interlocking mechanism positioned at an outer perimeter of the translucent piece to engage with the ring-shaped area on the camera cap body.

19. The apparatus of claim 14 wherein the translucent piece is one of a plurality of interchangeable translucent pieces, providing the user with different choices in achieving a neutral, cooling, or warming white balance effect.

20. The apparatus of claim 14 wherein the camera cap body further includes a transparent piece immovably fitted into the cut-out region of the camera cap body, the transparent piece oriented behind the translucent piece.
